# EUROPEAN PATENT APPLICATION

(11) **EP 2 099 160 A1**
(43) Date of publication of application: **09.09.2009**
(21) Application number: 05026958.8
(22) Date of filing: 09.12.2005
(51) Int. Cl.: H04L 12/28, H04W 4/00

(54) **Method for client-server-based communication over several interfaces and client supporting this method**

(71) Applicant: BenQ Corporation, Gueishan Taoyuan 333 (TW)
(72) Inventor: Koora, Kalyan, 46395 Bocholt (DE); Naumann, Mirko, 82538 Geretsried (DE)
(74) Representative: Görz, Ingo

(57) **Abstract**

Method for communication between a client (CL) and a server (SV) in which method the client is able to
- use one of several - i.e. at least two - interfaces (INTF1, INTF2, ..., INTFN) and to
- switch between these interfaces (INTF1, INTF2, ..., INTFN) during a communication session,

in which method the client (CL) uses a local proxy (LSP) taking care for appropriate re-registration with the server (SV) when the client switches between two interfaces (INTF1, INTF2, ..., INTFN).

## Description

Various protocols are known for client-server-based communication, supporting sessions with two or more than two participants like conferencing, etc. A very important and widely used protocol of that kind is the so called Session Initiation Protocol.

Session Initiation Protocol (SIP) is used to signal and control interactive multimedia sessions in the fixed line network as well as in the mobile network of 3rd generation. It is a signalling protocol for Internet conferencing, telephony, presence, event notification and instant messaging. SIP enables user mobility through a mechanism that allows requests to be proxied or redirected to the user's current location. Users can register their current location with their home server. SIP is independent of the lower-layer transport protocol, which allows SIP to take advantage of new transport protocols. Presently, this protocol supports mobility of the user by registering the user's location (e.g. IP address) over an interface of a terminal which is kept constant through out the registration.

Even for sessions it is assumed that the interface which is chosen for the user data (user plane) will not change while the session is active. When the user moves to another device (e.g. other PC or other mobile device) by a new registration process, the user binds the new IP address to his globally unique SIP address. Afterwards the user is reachable via the new device. For UMTS multimedia sessions and IP based services a new network was introduced by 3GPP. The IMS (i.e. IP Multimedia Subsystem) uses SIP as signalling protocol for multimedia sessions (like PoC or VoIP) transport of presence information and the exchange of Instant Messages.

Now, in a mobile environment (with mobile terminals) the terminal may have several interfaces (i.e. a so called Multimode Terminal-MMT) e.g. WLAN, UMTS, GPRS ... and the IMS is reachable via several (air-)interfaces. By moving around, the signal strength for the interfaces may vary. This leads to the situation that a link (used for signalling) is lost. This is just noticed by a lower layer (interface layer) but the SIP registration and maybe SIP session has to be renewed / updated. So, the SIP stack and or application would have to provide a specific interface to get a specific notification. Afterwards the stack and/or the application have to update the registration and all running sessions. This would make an application and/or the SIP stack dependent of the kind of terminal (Multimode or not). Although Mobile IP (MIP) aims to introduce mobility, the change in interface and the IP address have to be informed to all the modules and applications. This implicitly implies that the user would have to interact and to activate the new connection.

The current invention aims at improving this situation and its deficiencies. This is achieved by a method or apparatus according to one of the claims.

The invention is disclosed in detail in the following by help of figures showing features of the invention in a schematic manner.
- Figure 1: shows a state-of-the-art of SIP signalling.
- Figure 2: shows an enhancement of SIP signalling with LSP.
- Figure 3: shows an example scenario.
- Figure 4: shows a possible position of the new module within the MMT.
- Figure 5: shows a typical configuration according to the present invention.

The current invention may - in particular but not exclusively
- be realized by
- a method for communication between a client (CL) and a server (SV) in which method the client is able to
- use one of several - i.e. at least two - interfaces (INTF1, INTF2, ..., INTFN) and to
- switch between these interfaces (INTF1, INTF2, ..., INTFN) during a communication session,
   in which method the client (CL) uses a local proxy (LSP) taking care for appropriate re-registration with the server (SV) when the client switches between two interfaces (INTF1, INTF2, ..., INTFN);
- a method of the kind explained before, in which the local proxy (LSP) also takes care for modifying messages if necessary to avoid any disturbance of the communication session caused by the switching between interfaces;
- a client (CL) set up for communication with a Server (SV) over one of several interfaces (INTF1, INTF2, ..., INTFN) with the ability to switch between these interfaces (INTF1, INTF2, ..., INTFN) during a communication session, said client using a local proxy (LSP) taking care for appropriate re-registration with the server (SV) when the client switches between two interfaces (INTF1, INTF2, ..., INTFN).
- a client of the kind explained before, using a local proxy (LSP) also taking care for modifying messages if necessary to avoid any disturbance of the communication session caused by the switching between interfaces.

This invention proposes the introduction of a new module within the MMT. The new module is enhanced with an intelligent functionality which is capable of handing over the SIP signalling to other interfaces depending on the preferences. This is done by sending an automatic re-register to the Registrar. Following SIP requests sent out by the SIP stack will be modified so that the used interface address is always correct. This keeps the user connected to the IMS/SIP network and able to use the IMS/SIP services. The invention offers a way to keep IMS/SIP application and the SIP stack independent of the specific behaviour necessary for a MMT.

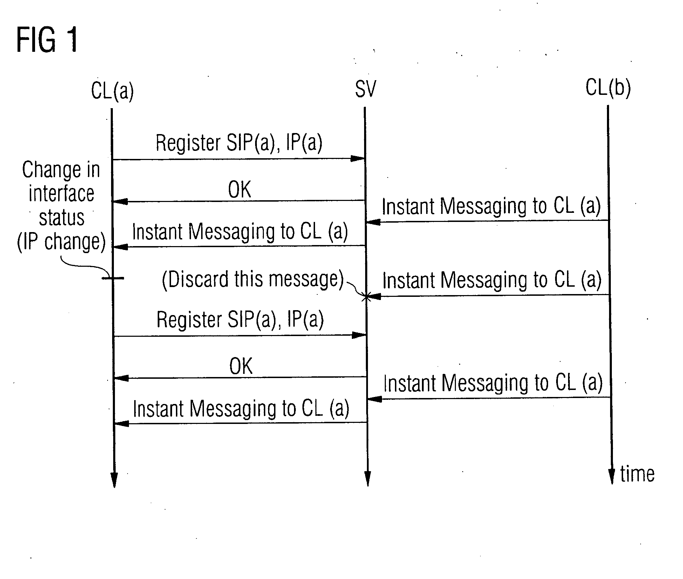

Figure 1 shows the state-of-the-art of SIP signalling. As shown, the MMT (terminal A or CL (a)) directly contacts the IMS (SV). For the sake of understanding, it is assumed that the IMS comprises all the required components like Registrar, Proxy, Re-Direct server, etc. User A (of terminal A) sends a registration to IMS (SV). Afterwards all services (Presence, Instant Messages, Sessions, PoC) can be used. If the link to IMS breaks or changes, the mobile terminal of user A is not reachable anymore. This means IM's, session invitations, presence updates send by or via IMS will not reach user A and user A will not have any information about this (till the registration times out and will be renewed). In this case the IMS server could discard the messages directed to terminal A.

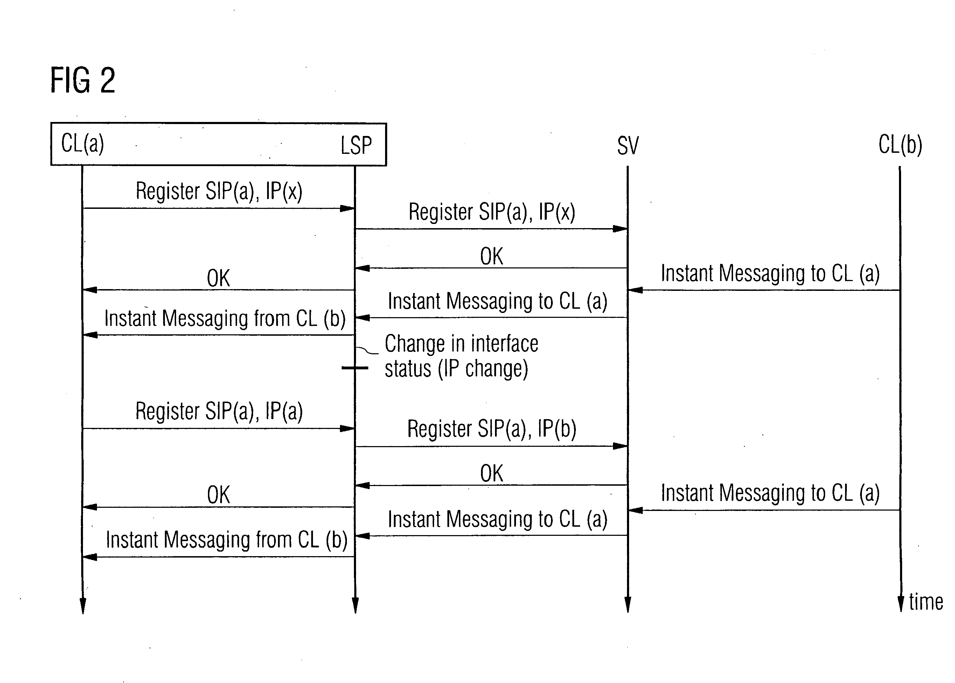

On the contrary to the standard concept, the invention introduces a new module within the MMT. This is shown in figure 2. The SIP stack will be configured in that way that it communicates with the new module as this new module would be a local SIP proxy (LSP) and sends its contact details like SIP and IP address. In case of IP address (designated in figure 2 as 'IP(x)'), the SIP stack selects randomly one from a set of available IP addresses (Note that in a MMT each interface is having an IP address). This IP could be for example the local IP address (127.0.0.1). The LSP modifies the messages sent by SIP stack according to the needs and transmits the correct information to the IMS server.

As shown above, if there is a change in the interface, LSP takes care of the re-registration with IMS server. Thus, the LSP is in a position to handle all the interfaces and control the handover mechanisms without disturbing the SIP registration.

Introducing the new module in a terminal lead to following advantages:
- All the standard signalling mechanisms are supported, since the terminal is still standard confirm.
- Since the SIP stack is usually contacting a SIP proxy, no special changes have to be done to the stack.
- The new module takes care of handing over the signalling to an active interface, if interfaces are coming up and going down.
- SIP (Re-)Registration are carried out through the new module automatically
- The new module changes the SIP messages regarding the current configuration (IP, ports ...)
- The new module is transparent to the applications and acts as a gateway.

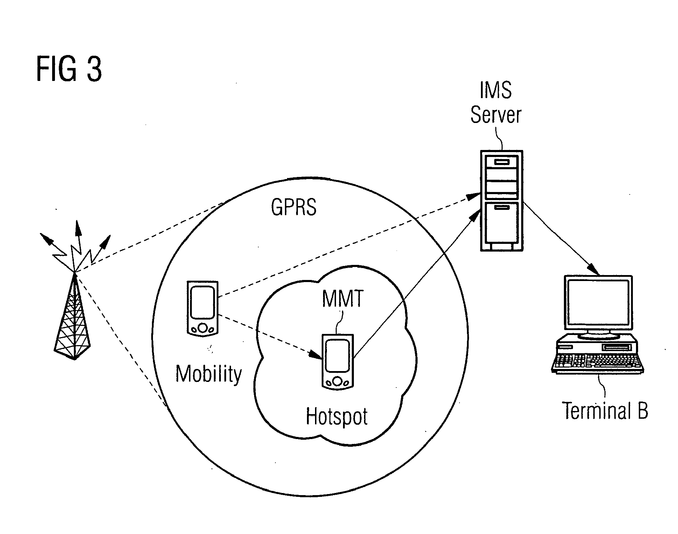

We discuss the idea with help of a scenario as depicted in the figure 3.

It is assumed that the MMT has two interfaces, GPRS and WLAN. Being outside of a WLAN hotspot, the MMT would like to establish a SIP session with terminal B (also designated as CL (b) in the figures) over the GPRS interface. At this point the WLAN interface is inactive. It is also assumed that the MMT is enhanced with the new LSP module. As described in the section 3, the MMT registers itself at the IMS server its location using the new module. After that, an Instant Message, sent by B can be exchanged in the standard SIP procedure. Now the MMT moves into a WLAN hotspot and gets itself registered with the hotspot and activates its WLAN interface. Since the user of the MMT prefers the WLAN over GPRS interface, now the new module carries the re-registration process over the WLAN interface and updates its database at the IMS server so that it can be accessed by terminal B.

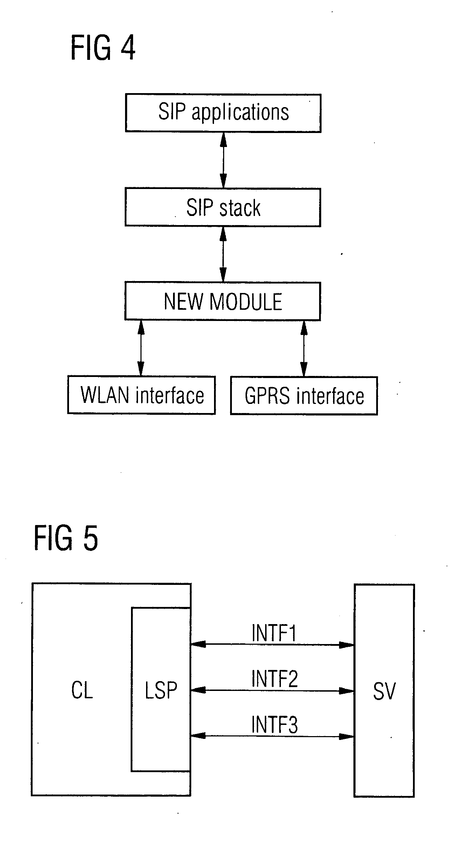

Figure 4 shows the position of the new module within the multi-mode terminal. The new module is in charge of handling all the registration signalling over the appropriate interface.

## Claims

1. Method for communication between a client (CL) and a server (SV) in which method the client is able to
- use one of several - i.e. at least two - interfaces (INTF1, INTF2, ..., INTFN) and to
- switch between these interfaces (INTF1, INTF2, ..., INTFN) during a communication session,
in which method the client (CL) uses a local proxy (LSP) taking care for appropriate re-registration with the server (SV) when the client switches between two interfaces (INTF1, INTF2, ..., INTFN).

2. Method according to claim 1 in which the local proxy (LSP) also takes care for modifying messages if necessary to avoid any disturbance of the communication session caused by the switching between interfaces.

3. Client (CL) set up for communication with a Server (SV) over one of several interfaces (INTF1, INTF2, ..., INTFN) with the ability to switch between these interfaces (INTF1, INTF2, ..., INTFN) during a communication session, said client using a local proxy (LSP) taking care for appropriate re-registration with the server (SV) when the client switches between two interfaces (INTF1, INTF2, ..., INTFN).

4. Client according to claim 3 using a local proxy (LSP) also taking care for modifying messages if necessary to avoid any disturbance of the communication session caused by the switching between interfaces.
